# EUROPEAN PATENT APPLICATION

(11) **EP 3 584 304 A1**
(43) Date of publication of application: **25.12.2019**
(21) Application number: 18178377.0
(22) Date of filing: 18.06.2018
(51) Int. Cl.: C12G 3/08

(54) **METHOD FOR DEALCOHOLIZATION OF BEVERAGES**

(71) Applicant: Clariant Produkte (Deutschland) GmbH, 65929 Frankfurt am Main (DE)
(72) Inventor: BERTSCH, Sebastian, 82362 Weilheim (DE); VERHUELSDONK, Marcus, 82110 Germering (DE); ZAVREL, Michael, 82140 Olching (DE); GENSLER, Sven, 81379 München (DE)
(74) Representative: Graser, Konstanze

(57) **Abstract**

The present invention relates to a method and production system for dealcoholization of beverages such as beers and wines.

## Description

The present invention relates to a method and production system for dealcoholization of beverages such as beers and wines.

Within the past 10 years the demand for beverages of reduced alcohol content or even complete removal of alcohol increased considerably. As a result, numerous alcohol-free beers have appeared on the market, and there have been similar efforts to produce light wines. Industry expects that global sales of low and non-alcoholic beer will raise to 25 billion US$ until 2024 (https://globenewswire.com/news-release/2018/03/20/1442488/0/en/Worldwide-Non-alcoholic-Beer-Market-worth-over-25-billion-by-2024-Global-Market-lnsights-lnc.html). The reason for the strong increase is due to several aspects such as health, diet (desired low caloric content), safety in the workplace or within the framework of road traffic (increasingly restrictive traffic laws regarding blood alcohol content), or prohibition of alcohol consumption in factories and shops caused by labor protection laws. There are also countries where alcohol consumption is absolutely forbidden by law.

Existing methods of reducing alcohol content of beer such as heating and distillation (e.g. vacuum distillation), osmosis, microfiltration, restricted alcohol fermentation ("cold brewing") or dilution often result in products with artificial and dull flavor as well as improper body and foaming properties (Sohrabvandi, S. et al., Alcohol-free Beer: Methods of Production, Sensorial Defects, and Healthful Effects, Food Reviews International, 26(4):335-352 · September 2010).

Maintaining an attractive flavor profile which will be accepted by the consumer is even more challenging for the production of low or non-alcoholic wine as beer can tolerate rougher treatments. Within beer, lost flavor may be partly restored by the addition of aroma substances recovered from yeast (DE 1 767 040), but it is impossible to apply this method for the restoration of flavor of wine.

Therefore, production of alcohol-free beverages with satisfactory organoleptic characteristics which can be compared with conventional beers and wines is of considerable interest.

The inventors of the present invention have therefore set themselves the task to provide a method and production system by which alcoholic beverages such as wines and beers of low and non-alcoholic content can be product which do not suffer from a loss of flavor and organoleptic properties.

This task has been solved by a method for dealcoholization of beverages comprising the steps
(a) Providing a beverage containing from 1 to 40 vol.-% of ethanol in a container;
(b) Conveying the beverage through at least one exchange column comprising filling material and an counter-currently flowing inert-gas stream;
(c) Contacting the inert-gas stream with at least one adsorber column comprising a MFI zeolite and/or a silicalite with a molar SiO₂/Al₂O₃ ratio of at least 200;
(d) Recycling of the inert-gas stream to the at least one exchange column;
(e) Desorbing the ethanol from the at least one adsorber column;
(f) Repeating steps (a) to (e) at least once;
wherein steps (c) and (e) are at least partly carried out simultaneously.

The method of the present invention does not only produce beverages with low or no alcohol content which do not suffer from a significant flavor loss and decrease of organic properties. It is also a cost efficient and suitable for industrial scale production as energy consumption is low and the method can be carried out in a continuous fashion. In addition, the desired final alcohol content can be exactly controlled. Furthermore, the removed alcohol is of a very high purity and can be commercialized. In addition, undesirable foaming can be avoided.

Within the scope of the present invention, the term "beverage" is to be understood as comprising beer, wine and mash. The inventive method is particularly suitable for all kinds of beer and wine known to a person skilled in the art as for example strong beer, lager, ale, pale beer, wheat beer, stout, rice beer, sake, cider, white wine, red wine, rose, cidre and sparkling wine. It is also within the scope of the present invention to apply the inventive method during the mash stage of wine or beer production.

Within the scope of step a), the term "conveying" is understood as meaning any type of conveying which appears to the person skilled in the art to be suitable for the purpose according to the invention. In a preferred embodiment, the conveying according to step b) of the method according to the invention is carried out by pumping the beverage through the exchange column. Within a particularly suitable embodiment of the inventive method, the flow rate of the beverage is selected from the range of from 0.1 to 1.5 L (litre) beverage/ hour/L exchange column capacity. Other suitable low rates are selected from the range of from 0.5 to 1.3 and from 0.8 to 1.0 L beverage /hour / L exchange column capacity. Within another particularly advantageous embodiment, the flow rate of the of beverage through the at least one exchange column is selected from the range of from 2 10⁻⁴ to 40 10⁻⁴ m³ beverage/(m² exchange column cross section area · s), such as from 0.5 10⁻⁴ to 20 10⁻⁴ or from 1 10⁻⁴ to 10 10⁻⁴ m³ beverage/(m² exchange column cross section area · s). To choose the flow rate of the beverage within these ranges has the advantage that foaming can be kept to a minimum or even be fully avoided.

The at least one exchange column comprises a filling material which increases the surface of the beverage to generate a large material exchange surface with the inert-gas stream which is implemented counter-currently to the beverage stream. A particular suitable embodiment of the inventive method comprises one or two exchange columns.

The filling material may be advantageously selected from saddles, pall rings, hacketten or Raschig rings. Within a particularly suitable embodiment of the inventive method the filling material of the at least one exchange column comprises from 100 to 5000 Raschig rings per litre exchange column capacity, wherein from 500 to 4500, or from 1000 to 4300 Raschig rings per litre exchange column capacity lead to particularly advantageous results. Particularly suitable results can be achieved for a filling material wherein the size of each saddle, pall ring, hacket or Raschig ring is selected from the range of from 1/10 to 1/50 of the diameter of the exchange column. Other suitable ranges are from 1/15 to 1/45 of the diameter of the exchange column or from 1/20 to 1/40 of the diameter of the exchange column.

The method according to the invention is particularly advantageous for beverages having an alcohol content of from 1.0 to 40 vol.-%, wherein exemplary concentration ranges for which the method according to the invention is particularly suitable is an alcohol content of from 1 to 25 vol.-% and from 2 to 20 vol.-%, as well as from 2.5 to 15 vol.-%.

Within the inventive method, the beverage is provided within a container. The container may be selected from any kind of container known to a person skilled in the art as suitable for the inventive method. Examples for suitable containers are reactors such as a stirred tank reactor or a tank reactor without a stirrer.

Within the exchange column, the beverage stream is also contacted with a counter-flowing inert-gas stream. Within a particularly suitable embodiment of the inventive method the specific flow rate of the inert-gas stream is selected from the range of from 30 to 600 L inert-gas/ hour / L packed volume of the exchange column. Other suitable ranges are from 50 to 500 L inert-gas/ hour / L packed volume or from 75 to 400 L inert-gas/ hour / L packed volume. Within an alternative suitable embodiment, the specific flow rate of the inert-gas stream is selected from the range of from 50 to 950 L inert-gas/ hour / L volume adsorber. Other suitable ranges are from 80 to 900 L inert-gas/ hour / L volume adsorber or from 120 to 750 L inert-gas/ hour / L volume adsorber. Within another advantageous embodiment of the inventive method the flow rate of the of the inert-gas stream through the at least one exchange column is from 0.05 to 0.5 m³ inert-gas/(m² exchange column cross section area · s), such as from 0.075 to 0.25 m³ inert-gas/(m² exchange column cross section area · s) or from 0.09 to 0.20 m³ inert-gas/(m² exchange column cross section area · s).

Exemplary inert-gases particularly suitable for the inventive method are CO₂ and N₂. After leaving the at least one exchange column, the beverage stream is either recycled to the container or separated from the system. At this stage, one or more aroma components might be added to the beverage stream. Such aromatic components might be of natural or synthetic origin and may be selected from aromatic extracts from fruit, herbs and vegetables such as grapes and hops. Furthermore, extracts from bacteria, yeast and fungi might be added.

According to step (c) of the inventive method and after leaving the at least one exchange column, the inert-gas stream is contacted with at least one adsorber column. The term "contacting" within the scope of step c) of the method according to the invention is understood as meaning any type of contacting which appears to the person skilled in the art to be suitable for the purpose according to the invention. Contacting within the scope of step c) can be advantageously conducted by passing the inert-gas stream through the at least one adsorber column. Within special embodiments, a plurality of columns, such as from 2 to 10 or from 2 to 6 adsorber columns are used. Exemplary embodiments of the inventive method use 4, 5 or 6 adsorber columns. These columns can be connected in series or in parallel.

Within the scope of the present invention, the at least one adsorber column comprises an MFI zeolite and/or a silicalite with a molar SiO₂/Al₂O₃ ratio of at least 200. Exemplary molar SiO₂/Al₂O₃ ratios are from 200 to 1600, from 350 to 1500, from 400 to 1400, from 500 to 1300 or from 800 to 1200. In embodiments with more than one adsorber column the columns may comprise the same or a different adsorber material.

Within the scope of an exemplary embodiment, the amount of zeolite in the adsorber is at least 10 wt.-% (based on the total weight of the adsorber), further suitable amounts are at least 25 wt.-%, at least 50 wt.-%, at least 75 wt.-%, at least 85 wt.-% or at least 90 wt.-%. Suitable ranges are from 10 to 100 wt.-%, from 30 to 100 wt.-%, from 50 to 100 w.-%, from 40 to 95 wt.-%, from 50 to 95 wt.-%, from 60 to 95 wt.-% or from 60 to 100 wt.-%.

Within another exemplary embodiment, the pore diameter of the MFI zeolite is not more than 8 Å (or not more than 7.5 Å, not more than 7 Å or not more than 6.5 Å. Suitable ranges of the pore diameter are from 5 to 8 Å, from 5.5 to 7 Å, from 6 to 6.5 Å, from 5 to 6.5 Å or from 2.4 to 3.4 Å. Within particularly suitable embodiments the amount to zeolite with a pore diameter selected from above defined ranges is chosen in the range of from 25 to 100 wt.-% (based on the total weight of the adsorber), of from 50 to 100 wt.-%, of from 75 to 100 wt.-% or from 90 to 100 wt.-%.

In another suitable embodiment, the ratio by mass of the adsorbed compounds to the mass of the MFI zeolite and/or silicalite having a pore diameter of not more than 8 Å is selected from the range of from 1 to 1000 or from 2 to 500 or from 3 to 200, likewise suitable ranges are ranges of from 4 to 100 and from 5 to 50.

In a particularly suitable embodiment, the MFI zeolite is a zeolite which, at a temperature of 40°C and a pressure of 1.013 bar absolute, binds at least twice the mass, preferably 2.5 times the mass and particularly preferably three times the mass of alcohols including methanol, ethanol or propanol, as compared with water, when the liquid is an aqueous solution of at least 50 g/l alcohols. These properties of the MFI zeolite can be determined by stripping 500 ml of an aqueous solution comprising at least 50 g/l of the alcohol for 24 hours at a pressure of 1.013 bar and a temperature of 30°C with 1 litre of inert gas volume per minute and passing the gas stream enriched with the alcohol through a column filled with 400 g of the MFI zeolite. The gas stream depleted of the alcohol is recycled. The total mass taken up is determined by determining the weight of the MFI zeolite before and after the test. The amount of water can be determined by Karl-Fischer titration. The remainder of the bound mass is attributable to the adsorbed alcohol. A liquid consisting of 50 g/l of ethanol in water is used.

Within the scope of the present invention, further possible constituents of the adsorber can be chosen from the group consisting of silica, bentonites, silicates, clays, hydrotalcites, aluminum silicates, oxide powders, mica, glasses, aluminates, clinoptolites, gismondines, quartzes, active carbons, animal charcoal, montmorillonites, as well as organic polymers which are known to the person skilled in the art as being suitable for the method according to the invention, and mixtures thereof. Polytetrafluoroethylene (PTFE, Teflon) is additionally suitable as a constituent of the adsorber. Within the scope of the method according to the invention, a suitable amount of a binder and/or PTFE in the adsorber is not more than 75 wt.-%, not more than 50 wt.-%, not more than 25 wt.-%, not more than 20 wt.-% or not more than 10 wt.-%. Within particularly suitable embodiments the amount of a binder and/or PTFE in the adsorber is chosen in the range of from 10 to 50 wt.-% or in the range of from 10 to 25 wt.-%.

The expression "pore diameter" is understood as meaning the maximum diameter of a theoretical sphere which can be embedded in the micropores of the zeolite.

The expression "molecule diameter" is understood as meaning the diameter of the maximum projection diameter of a molecule.

Within step (d) of the inventive method, the inert-gas stream leaving the at least one adsorber column is then recycled to the at least one exchange column. The recycling can be carried out by any means or measure known to a person skilled in the art as suitable for the purpose of the inventive process.

Within step (e) of the inventive method, the ethanol is then desorbed from the at least one adsorber column. It is thereby a particular advantage of the inventive method that molecules bound to the adsorber can be desorbed and recovered in a simple and economically expedient manner.

It is possible in particular to carry out a selective desorption of the ethanol from the adsorber by increasing the temperature and/or reducing the pressure within the at least one adsorber column. In a particularly suitable embodiment of the inventive method, the thermal energy is introduced directly onto the adsorbent packing via the column wall and optionally additionally via the heating coils inside the column. Temperatures between 25 and 300°C and absolute pressures between 0 and 10 bar are particularly suitable. Temperatures between 40 and 180°C and absolute pressures at reduced pressure, preferably between 0.01 and 1 bar are also possible.

A carrier gas is used for discharging the desorbed molecule/molecules from the at least one adsorber column. It is possible to use the same kind of inert carrier gas which is used within the scope of step c) of the method according to the invention. Heat exchangers and/or throttles or compressors arranged upstream are suitable for this purpose.

The desorption can be carried out in fluidized bed operation.

The desorption can further take place
- by displacement by means of other components;
- thermally, that is to say by increasing the temperature of the adsorption agent (temperature-swing adsorption process (TSA));
- by means of the so-called pressure-swing adsorption process (PSA), that is to say by lowering the pressure;
- by chemical reaction;
- by a combination of the above-mentioned methods.

Likewise a flushing gas can be used in the desorption. Suitable flushing gases are inert gases, the flushing gases are for example air, carbon dioxide, nitrogen, noble gases or mixtures thereof. It is further possible that the flushing gas comprises water. Within a particular suitable embodiment, the temperature of the flushing gas is above the temperature of the compound material.

Within step (f) of the inventive method, steps (a) to (e) are repeated at least once. Within exemplary embodiments, steps (a) to (e) are repeated from 2 to 50,000 times, from 50 to 40,000 times or from 500 to 3500 times. It is particularly suitable to carry out the method according to the invention as a continuous procedure. The expression "continuous procedure" is within the scope of the standard knowledge known to the person skilled in the art. Within a particularly suitable embodiment of the inventive process steps (a) to (e) are repeated from 10 to 1500 times for a time period of from 2 minutes to 60 minutes, wherein time periods of from 5 minutes to 55 minutes and from 10 minutes to 55 minutes also lead to particularly advantageous results.

Within the method of the present invention, steps (c) and (e) are at least partly carried out simultaneously. The term "at least partly" is to be understood as at least for a time of at least 10% of the total duration of the method according to the invention according to steps (c) to (f). It is particularly suitable that all the operations of steps (c) and (e) are carried out at the same time. It is further particularly suitable that steps (c) and (e) are carried out simultaneously over a period of at least 20% or over a period of at least 30%, over a period of at least 40% or over a period of at least 60% of the total duration of the method according to the invention according to steps (c) to (f). Within another exemplary embodiment of the inventive method steps (b) to (e) are carried out simultaneously at least for a time of at least 10% of the total duration of the method according to the invention according to steps (c) to (f). It is thereby particularly suitable that steps (b) to (e) are carried out simultaneously over a period of at least 20% or over a period of at least 30%, over a period of at least 40% or over a period of at least 60% of the total duration of the method according to the invention according to steps (c) to (f).

By carrying out steps (c) and (e) of the method according to the invention at least partly simultaneously, it is ensured that dealcoholized beverage can be continuously separated. Within a particular advantageous embodiment the inventive method therefore further comprises step (g) separating the dealcoholized beverage. Separation can be carried out by any means or measure known to a person skilled in the art as suitable for the inventive process. It is of particular advantage of the inventive method that a precise selection of the desired final ethanol content is possible as the dealcoholized beverage can be separated from the system at any time.

The present invention also pertains to a system for carrying out the inventive method for dealcoholization of beverages, comprising
(i) A container;
(ii) At least one exchange column comprising a filling material;
(iii) At least two adsorber columns comprising a MFI zeolite and/or a silicalite with a molar SiO₂/Al₂O₃ ratio of at least 200.

Within a particularly suitable embodiment of the inventive system, at least one desorption cycle is connected to at least one of the at least two adsorber columns. It is thereby particularly advantageous if one desorption cycle is connected to each adsorber column.

Within another particularly suitable embodiment, the inventive system contains at least one heat exchanger such as (but not limited to) a plate heat exchanger, a tube heat exchanger or a shell heat exchanger. The heat exchanger is used to cool down the gas stream leaving the adsorber column to condensate the ethanol within the stream.

Within another particularly suitable embodiment of the inventive system, the system further contains at least one ethanol trap to effectively collect and remove the ethanol from the system. Within a particular advantageous embodiment, the at least one ethanol trap comprises a valve for discharging the ethanol from the trap.

Within another particularly suitable embodiment of the inventive system, the system further contains at least one inert-gas source. It is thereby particularly advantageous to use surplus CO₂ from the fermentation process within the inventive system. In case the beverage is selected to be beer or wine, the CO₂ might originate from the brewing or wine production process itself.

### Specific embodiments of the present invention

The following specific embodiments define embodiments which are particularly advantageous for the inventive dealcoholization process and system. These embodiments are not meant to limit the scope of the present application in any respect.

### Specific embodiment A

Method for dealcoholization of beverages comprising the steps
(a) Providing a beverage selected from beer or wine containing from 1 to 40 vol.-% of ethanol in a container;
(b) Conveying the beverage through at least one exchange column comprising filling material and a counter-currently flowing inert-gas stream;
(c) Contacting the inert-gas stream with at least one adsorber column comprising a MFI zeolite with a molar SiO₂/Al₂O₃ ratio of from 800 to 1200, wherein the amount of MFI zeolite in the adsorber is from 60 to 100 wt.-%;
(d) Recycling of the inert-gas stream to the at least one exchange column;
(e) Desorbing the ethanol from the at least one adsorber column;
(f) Repeating steps (a) to (e) at least once;
wherein steps (c) and (e) are at least partly carried out simultaneously.

### Specific embodiment B

Method for dealcoholization of beverages comprising the steps
(a) Providing a beverage selected from beer or wine containing from 1 to 40 vol.-% of ethanol in a container;
(b) Conveying the beverage through at least one exchange column comprising filling material and a counter-currently flowing inert-gas stream;
(c) Contacting the inert-gas stream with at least one adsorber column comprising a MFI zeolite with a molar SiO₂/Al₂O₃ ratio of from 800 to 1200, wherein the amount of MFI zeolite in the adsorber is from 60 to 100 wt.-%;
(d) Recycling of the inert-gas stream to the at least one exchange column;
(e) Desorbing the ethanol from the at least one adsorber column;
(f) Repeating steps (a) to (e) at least once;
wherein steps (c) and (e) are at least partly carried out simultaneously and wherein the flow rate of the inert-gas stream through the at least one exchange column is selected from the range of from 30 to 600 L inert-gas/ hour / L packed volume of the exchange column and wherein the specific flow rate of the inert-gas stream through the at least one adsorber column is selected from the range of from 50 to 950 L inert-gas/ hour / L volume adsorber.

### Specific embodiment C

Method for dealcoholization of beverages according any of specific embodiments A or B, wherein desorbing the ethanol from the at least one adsorber column is carried out by a CO₂ gas flow of from 0.2 to 0.8 L/min.

### Specific embodiment D

Method for dealcoholization of beverages according to any of specific embodiments A or C, wherein the flow rate of the of the inert-gas stream through the at least one exchange column is from 0.05 to 0.5 m³ inert-gas/(m² exchange column cross section area · s).

### Specific embodiment E

Method for dealcoholization of beverages according to any of specific embodiments A, C or D, wherein the flow rate of the of beverage through the at least one exchange column is from 2 10⁻⁴ to 40 10⁻⁴ m³ beverage/(m² exchange column cross section area · s).

### Specific embodiment F

System for the dealcoholization of beverages, comprising
(i) A container [6];
(ii) One exchange column [1] comprising a filling material [2];
(iii) Two adsorber columns [4a] and [4b] or three adsorber columns [4a], [4b] and [4c] comprising a MFI zeolite with a molar SiO₂/Al₂O₃ ratio of from 800 to 1200, wherein the amount of MFI zeolite in the adsorber is from 60 to 100 wt.-%;
(iv) One desorption cycle connected to both adsorber columns [4a] and [4b];
(v) One ethanol trap [12];
(vi) Two inert-gas sources [GS1] and [GS2].

### Examples and Figures

The present invention is explained in greater detail below by means of the examples. It is emphasized that the examples illustrate particular embodiments and do not limit the scope of the present application in any way.
- Fig. 1:: shows an exemplary system according to the invention comprising on exchange column and two adsorber columns
- Fig. 2:: shows an exemplary system according to the invention comprising one exchange column, two adsorber columns, a heat exchanger and an ethanol trap
- Fig. 3:: shows the results of example 1
- Fig. 4:: shows the results of example 3
- Fig. 5:: shows the results of example 4
- Fig. 6:: shows the results of example 5

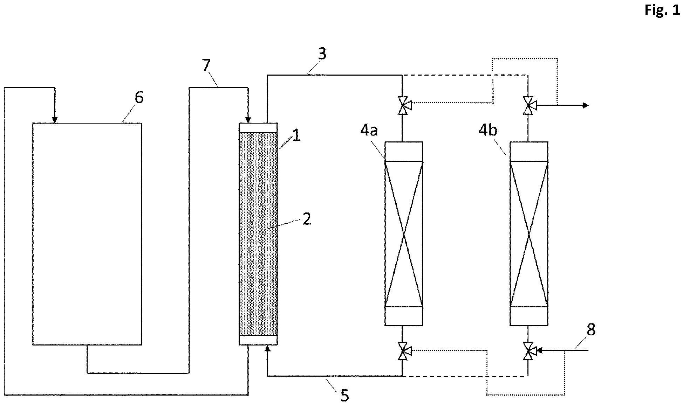

### Detailed description of Fig.1:

Fig. 1 shows an exemplary system for conducting a method for dealcoholization of beverages comprising the steps
(a) Providing a beverage containing from 1 to 40 vol.-% of ethanol in a container [6];
(b) Conveying the beverage [7] through one exchange column [1] comprising filling material [2] and an counter-currently flowing inert-gas stream [3];
(c) Contacting the inert-gas stream with at least one adsorber column [4a] or [4b] comprising a MFI zeolite and/or a silicalite with a molar SiO₂/Al₂O₃ ratio of at least 200;
(d) Recycling of the inert-gas stream [5] to the exchange column [1];
(e) Desorbing [8] the ethanol from at least one adsorber column [4a] or [4b] ;
(f) Repeating steps (a) to (e) at least once;
wherein steps (c) and (e) are at least partly carried out simultaneously.

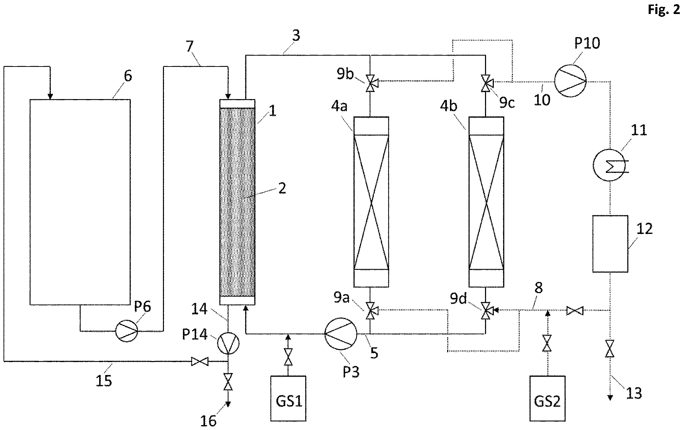

### Detailed description of Fig. 2:

Figure 2 exemplarily shows another setup of an inventive system comprising one exchange column, two adsorber columns, a heat exchanger and an ethanol trap.

The system includes a container [6] providing the beverage. A feed line [7] is provided for conveying the beverage to the exchange column [1]. In this example the feed line is provided with a respective pumping unit [P6] for controlling respective feed line flows. The exchange column [1] is filled with filling material [2]. At the bottom of the exchange column the beverage containing reduced ethanol concentration is removed [14]. In this example the beverage is removed by using a pump [P14]. The beverage is either pumped back [15] into the container [6] or removed [16] depending on the desired final ethanol concentration of the beverage.

The system includes a gas feed line [3] to feed the inert-gas stream into the exchange column [1]. The gas feed line is provided with a pumping unit [P3] for pumping the inert-gas into the exchange column [1]. After leaving the exchange column the gas stream is contacted with the adsorber column [4a] or [4b] and recycled into the gas line [5] feeding exchange column. In the present example two columns are used [4a] and [4b]. The gas line includes a gas source [GS1] to balance gas losses during the switch from adsorption to desorption. For switch between adsorption and desorption valves [9a], [9b], [9c] and [9d] are used.

For desorption a gas line [8] is used provided by a gas source [GS2]. The gas desorbs the ethanol from the adsorber columns and leaves the adsorber columns in a gas line [10]. In this example a vacuum pump [P10] is used to reduce the pressure during desorption. The inert-gas stream is cooled by a heat exchanger [11] to condensate the ethanol and removed in an ethanol trap [12] from the gas stream. The inert-gas stream is either recycled into the desorption gas line [8] or removed [13].

### Example 1: Comparison batch and inventive continuous dealcoholization process 15 L beer (Oettinger export, 5.4 vol.-%) were provided in a container.

Within the batch process a CO₂ stream (20 L/min) was sparged at the bottom of the container. After leaving the container at the top the CO₂ gas stream was contacted with the adsorber columns and recycled into the container continuously.

Within the continuous process the beer was conveyed by using a peristaltic pump (Watson Marlow, 520DU) into an exchange column (height 1400mm, diameter 60mm) at the top of the column with a volume flow of 1.5 L/h. The exchange column (diameter 60 mm, height 1400 mm) was filled with filling material (Glas Raschig rings, diameter 4 mm, height 4 mm, Lenz Laborglas Instrumente). The dealcoholized beer was removed at the bottom by a second peristaltic pump (Watson marlow, 520DU) and fed back into the container. A counter-currently flowing CO₂ stream (20 L/min) was conveyed from the bottom to the top of the exchange column. The exchange column was used at a pressure of 1.013 bar and a temperature of 22 °C. The CO₂ gas stream was contacted with the adsorber columns and recycled into the exchange column.

For adsorption three adsorber columns were used, filled with adsorber material (Clariant, TZP9028; MFI Zeolith, molar SiO₂/Al₂O₃ ratio 1000). Simultaneously two columns were used for adsorption, one column for desorption. After 10 min the columns were switched. For desorption of the ethanol from the adsorber columns a CO₂ gas flow (0.5 L/min) was used. By a vacuum pump the pressure in the adsorber columns was reduced to 120 mbar.

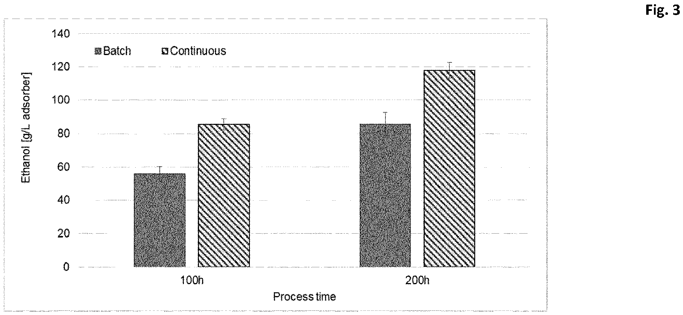

Figure 3 shows the mass of ethanol which was removed after 100 h and 200 h from the beer per L of used adsorber material. It is apparent from the results of example 1 that the inventive continuous process leads to a significant higher removal of ethanol.

### Example 2: Comparison of operating costs and environmental impact for reverse osmosis and inventive continuous dealcoholization process

The operating costs of the state of the art dealcoholisation by reverse osmosis were compared with the inventive process. For the reverse osmosis the data were used, provided by a manufacturer of a reverse osmosis plant for dealcoholization of beer (Alfa Laval beer dealcoholization system, Beer DeAL 300):
Energy price of 0.095€/kWh
Waste water costs of 1.50 €/m

The diafiltration water for the reverse osmosis unit was produced by a second reverse osmosis with an energy demand of 0.75 kWh/m³ for produced diafiltration water and a recovery of 80 %.

The tables 1 and 2 show the costs of both processes. The costs of the inventive continuous process are caused by the energy demand for the adsorption and desorption gas flows and the cooling and heating of these flows. The reverse osmosis needs less electrical energy but the costs are dominated by the disposal of the waste water. For the production of dealcoholized beer the threefold amount of diafiltrated water is needed.

It is apparent from the results as shown in tables 1 and 2 that the inventive process is more cost effective compared to the state of the art process of reverse osmosis. Another advantage is the minimization of wastes by the inventive process. Only a gas as CO₂ is needed for the process which is available from the fermentation and/or brewing process. For the reverse osmosis water and additional cleaning agents are needed which must be disposed.

**Tab 1 Costs for dealcoholisation by inventive continuous process**

| **Process** | **Costs [€ Cent/L beer]** |
|---|---|
| Adsorption | 0.3557 |
| Desorption | 0.0587 |
| Beer conveying | 0.0029 |
| **Total cost** | **0.4173** |

**Tab 2 Cost for state of the art dealcoholisation by reverse osmosis**

| **Process** | **Costs [€ Cent/L beer]** |
|---|---|
| Reverse osmosis | 0.2533 |
| Cleaning reverse osmosis | 0.1057 |
| Providing diafiltration water | 0.0214 |
| Waste water | 0.5875 |
| **Total cost** | **0.9679** |

### Example 3: Dealcoholization of beer (5.4 vol.-%) to 0.8 vol.-%

2 L beer (Oettinger export, 5.4 vol.-%) were provided in a container and conveyed by using a peristaltic pump (Watson Marlow, 520DU) into the exchange column (diameter 60mm, height 1400mm) at the top of the column with a volume flow of 1.5 L/h. The exchange column (diameter 60 mm, height 1400 mm) was filled with filling material (Glas Raschig rings, diameter 4 mm, height 4 mm, Lenz Laborglas Instrumente). The dealcoholized beer was removed at the bottom by a second peristaltic pump (Watson marlow, 520DU) and fed back into the container. A counter-currently flowing CO₂ stream (20 L/min) was conveyed from the bottom to the top of the exchange column. The exchange column was used at a pressure of 1.013 bar and a temperature of 22 °C. The CO₂ gas stream was contacted with the adsorber columns and recycled into the exchange column. For adsorption three adsorber columns were used, filled with adsorber material (Clariant, TZP9028; MFI Zeolith, molar SiO₂/Al₂O₃ ratio 1000). Simultaneously two columns were used for adsorption, one column for desorption. After 10 min the columns were switched. For desorption of the ethanol from the adsorber columns a CO₂ gas flow (0.5 L/min) was used. By a vacuum pump the pressure in the adsorber columns was reduced to 120 mbar.

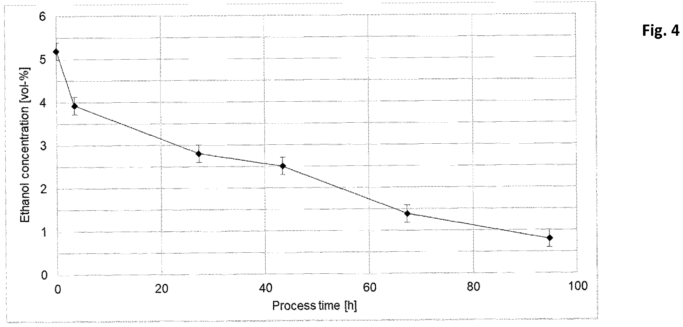

Figure 4 shows the ethanol concentration of the beer sample during the dealcoholisation process. It can be seen from the results of example 3 that the ethanol was removed from the beer continuously.

### Example 4: Dealcoholization of white wine (10.2 vol.-%) to 3.2 vol.-%

1.5 L white wine (Caveneta, Niederrhein-Gold Tersteegen GmbH & Co. KG, 10.0 vol.-%) were provided in a container and conveyed by using a peristaltic pump (Watson Marlow, 520DU) into the exchange column (1400 mm height, 60 mm diameter) at the top of the column with a volume flow of 1,5 L/h. The exchange column (diameter 60 mm, height 1400 mm) was filled with filling material (Glas Raschig rings, diameter 4 mm, height 4 mm, Lenz Laborglas Instrumente). The dealcoholized white wine was removed at the bottom by a second peristaltic pump (Watson marlow, 520DU) and fed back into the container. A counter-currently flowing CO₂ stream (20 L/min) was conveyed from the bottom to the top of the exchange column. The exchange column was used at a pressure of 1.013 bar and a temperature of 21 °C. The CO₂ gas stream was contacted with the adsorber columns and recycled into the exchange column. For adsorption three adsorber columns were used, filled with adsorber material (Clariant, TZP9028; MFI Zeolith, molar SiO₂/Al₂O₃ ratio 1000). Simultaneously two columns were used for adsorption, one column for desorption. After 10 min the columns were switched. For desorption of the ethanol from the adsorber columns a CO₂ gas flow (0.5 L/min) was used. By a vacuum pump the pressure in the adsorber columns was reduced to 120 mbar.

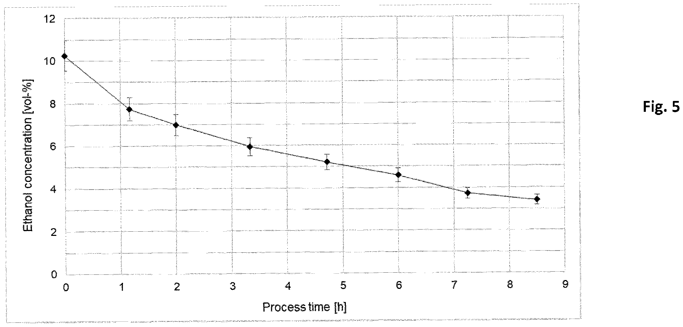

Figure 5 shows the ethanol concentration of the white wine sample during inventive dealcoholisation process. It can be seen from the results of example 4 that the ethanol was removed from the white wine continuously.

### Example 5: Dealcoholization of sparkling wine (10.2 vol.-%) to 4.0 vol.-%

1.5 L sparkling wine (Burg Schoeneck, St. Ambrosius Sektkellerei GmbH, 11.0 vol.-%) were provided in a container and conveyed by using a peristaltic pump (Watson Marlow, 520DU) into the exchange column (1400 height, 60 diameter) at the top of the column with a volume flow of 1.5 L/h. The exchange column (diameter 60 mm, height 1400 mm) was filled with filling material (Glas Raschig rings, diameter 4 mm, height 4 mm, Lenz Laborglas Instrumente). The dealcoholized sparkling wine was removed at the bottom by a second peristaltic pump (Watson marlow, 520DU) and fed back into the container. A counter-currently flowing CO₂ stream (20 L/min) was conveyed from the bottom to the top of the exchange column. The exchange column was used at a pressure of 1.013 bar and a temperature of 21 °C. The CO₂ gas stream was contacted with the adsorber columns and recycled into the exchange column. For adsorption three adsorber columns were used, filled with adsorber material (Clariant, TZP9028; MFI Zeolith, molar SiO₂/Al₂O₃ ratio 1000). Simultaneously two columns were used for adsorption, one column for desorption. After 10 min the columns were switched. For desorption of the ethanol from the adsorber columns a CO₂ gas flow (0.5 L/min) was used. By a vacuum pump the pressure in the adsorber columns was reduced to 120 mbar.

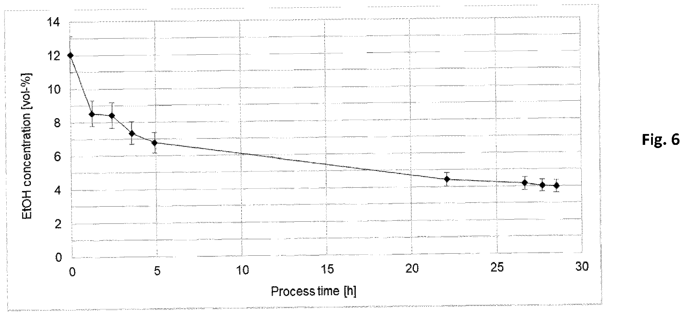

Figure 6 shows the ethanol concentration of the sparkling wine sample during the dealcoholisation process. It can be seen from the results of example 5 that the ethanol was removed from the sparkling wine continuously.

## Claims

1. Method for dealcoholization of beverages comprising the steps
(a) Providing a beverage containing from 1 to 40 vol.-% of ethanol in a container;
(b) Conveying the beverage through at least one exchange column comprising filling material and an counter-currently flowing inert-gas stream;
(c) Contacting the inert-gas stream with at least one adsorber column comprising a MFI zeolite and/or a silicalite with a molar SiO₂/Al₂O₃ ratio of at least 200;
(d) Recycling of the inert-gas stream to the at least one exchange column;
(e) Desorbing the ethanol from at least one adsorber column;
(f) Repeating steps (a) to (e) at least once;
wherein steps (c) and (e) are at least partly carried out simultaneously.

2. Method according to claim 1, wherein the at least one exchange column is a packed column.

3. Method according to any of the foregoing claims, wherein the beverage is selected from beer, wine or mash.

4. Method according to any of the foregoing claims, wherein the adsorber of the at least one adsorber column is an MFI zeolite, a silicalite or a mixtures thereof with a molar SiO₂/Al₂O₃ ratio of from 200 to 1500.

5. Method according to any of the foregoing claims, wherein steps (a) to (e) are repeated from 10 to 3500 times for a time period of from 2 minutes to 60 minutes.

6. Method according to any of claims 2 to 5, wherein the filling material of the at least one exchange column comprises from 100 to 5000 Raschig rings per liter exchange column capacity.

7. Method according to any of the foregoing claims further comprising the step (g) separating the dealcoholized beverage.

8. System for the dealcoholization of beverages, comprising
(i) A container [6];
(ii) At least one exchange column [1] comprising a filling material [2];
(iii) At least two adsorber columns [4a] and [4b] comprising a MFI zeolite and/or a silicalite with a molar SiO₂/Al₂O₃ ratio of at least 200;

9. System according to claim 8, wherein at least one desorption cycle is connected to at least one adsorber column [4].

10. System according to any of claims 8 or 9, wherein the system contains at least one heat exchanger [11].

11. System according to any of claims 8 to 10, wherein the system contains at least one ethanol trap [12].

12. System according to any of claims 8 to 11, wherein the system contains at least one inert-gas source [GS].
